# EUROPEAN PATENT APPLICATION

(11) **EP 4 576 629 A1**
(43) Date of publication of application: **25.06.2025**
(21) Application number: 23838833.4
(22) Date of filing: 06.07.2023
(51) Int. Cl.: H04L 5/00

(54) **METHOD AND DEVICE FOR WIRELESS COMMUNICATION**

(30) Priority: 15.07.2022 CN 202210836389
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN); WANG, Ping, Shanghai 201206 (CN)
(74) Representative: Gunzelmann, Rainer
(86) International application number: PCT/CN2023/106061
(87) International publication number: WO 2024/012341

(57) **Abstract**

Disclosed in the present invention are a method and device for wireless communication. The method comprises: receiving a first message, wherein the first message is used for indicating a first CSI-RS resource set, and the first CSI-RS resource set comprises a first CSI-RS resource. A frequency-domain resource through which the first CSI-RS resource passes comprises at least two RB sets, and any two of the at least two RB sets are discontinuous in a frequency domain. The present application can improve the configuration flexibility while maintaining good compatibility with existing systems.

## Description

### SPECIFICATION

### Technical Field

The present invention relates to a method and an apparatus in a wireless communication system, and in particular, to a scheme and an apparatus for a channel state information reference signal (CSI-RS) resource in a wireless communication system.

### Related Art

In conventional wireless communication, a user equipment (UE) may report at least one of a plurality of piece of assistant information, such as CSI, assistant information related to beam management (Beam Management), or assistant information related to positioning. The CSI includes a CSI-RS resource indicator (CRI), a rank indicator (RI), a precoding matrix indicator (PMI) or a channel quality indicator (CQI), layer 1 reference signal received power (L1-RSRP), or a layer 1 signal-to-noise and interference ratio (L1-SINR).

A base station selects an appropriate transmission parameter, such as a modulation and coding scheme (MCS), a transmitted PMI (TPMI), a transmission configuration indication (TCI), or the like, for the UE based on the CSI reported by the UE.

To calculate the CSI, the UE is configured with a CSI-RS resource and a CSI-interference measurement (CSI-IM) resource, where the former is used for channel measurement or interference measurement, and the latter is used for interference measurement. For the CSI-RS resource, configured resource blocks (RBs) are contiguous in frequency domain.

### SUMMARY

In a new radio (NR) system, subband non-overlapping full duplex (SBFD) is proposed. To be specific, one communication device simultaneously performs sending and receiving operations on two subbands. Through research, inventors found that a scheme for an existing CSI-RS resource is no longer applicable in an application scenario such as an SBFD scenario.

In view of the foregoing problem, this application discloses a solution. It should be noted that, although this application is originally intended to provide explanation for the SBFD scenario, this application can also be used in a non-SBFD scenario. Further, adopting a unified design scheme for the CSI-RS resource can reduce hardware complexity of interference measurement or reduce signaling overheads. Embodiments of any node and features in the embodiments in this application are applicable to any other node without conflict. Embodiments and features in the embodiments in this application may be arbitrarily and mutually combined without conflict.

If necessary, standards such as 3GPP standards TS38.214, TS38.331, and TS38.211 may be referred to, so as to better understand technical features in this application.

This application discloses a method applied to a first node configured for wireless communication, including:
receiving a first message, where the first message indicates a first CSI-RS resource set, and the first CSI-RS resource set includes a first CSI-RS resource.

A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the foregoing method can reduce signaling overheads for configuring one CSI-RS resource and improve transmission efficiency.

In an embodiment, the foregoing method can improve flexibility of configuring one CSI-RS resource in frequency domain.

Specifically, according to one aspect of the present invention, the method includes:
performing measurement on the first CSI-RS resource; and
sending first CSI.

The measurement performed on the first CSI-RS resource is used for calculating the first CSI; and the first CSI-RS resource is identified by one *NZP-CSI-RS-ResourceId*, and the measurement performed on the first CSI-RS resource includes channel measurement or interference measurement.

Specifically, according to one aspect of the present invention, the method includes:
receiving a first physical downlink shared channel (PDSCH).

The first CSI-RS resource is used for determining a resource element (RE) occupied by the first PDSCH, and the RE occupied by the first PDSCH does not include an RE of the first CSI-RS resource; and the first CSI-RS resource is identified by one *ZP-CSI-RS-Resourceld.*

Specifically, according to one aspect of the present invention, each of the at least two RB sets is indicated by one *CSI-FrequencyOccupation.*

In an embodiment, the foregoing method maintains maximum compatibility with an existing system, and in particular reduces hardware complexity of the first node for measurement.

Specifically, according to one aspect of the present invention, the first CSI-RS resource set includes a second CSI-RS resource, the second CSI-RS resource occupies only one RB set, and the one RB set includes a plurality of contiguous RBs.

The foregoing method enables one CSI-RS resource set to simultaneously include two types of CSI-RS resources, that is, a CSI-RS resource occupying contiguous RBs and a CSI-RS resource occupying discontiguous RBs, and has greater configuration flexibility.

In an embodiment, the one RB set is indicated by one *CSI-FrequencyOccupation.*

Specifically, according to one aspect of the present invention, the method includes:
sending a second message.

The second message is used for determining a configuration of the first CSI-RS resource, and the second message indicates a capability of the first node.

The foregoing method enables the first node to notify, based on the capability of the first node, a network device or a peer communication device whether or not discontiguous RB configuration is supported.

In an embodiment, a recipient of the second message determines, based on the second message, that the first node supports a CSI-RS resource occupying discontiguous RBs.

In an embodiment, the second message belongs to a *UE-NR-Capability* information element (IE).

In an embodiment, the second message belongs to a *FeatureSetDownlink* IE.

Specifically, according to one aspect of the present invention, the method includes:
receiving a third message.

The third message indicates a first reporting configuration, and the first reporting configuration is applied to the first CSI; and the first reporting configuration indicates that the CSI for a first frequency-domain resource is to be reported, and the first frequency-domain resource includes at least one RB that does not belong to the frequency-domain resource across which the first CSI-RS resource spans.

In a conventional solution, a CSI-RS resource associated with the first reporting configuration should occupy at least each RB of the first frequency-domain resource. However, the foregoing method can configure the CSI-RS resource more flexibly, to adapt to a scenario such as the SBFD scenario.

In an embodiment, the first frequency-domain resource includes at least one subband.

Specifically, according to one aspect of the present invention, the third message indicates a first CSI-IM resource set, the first CSI-IM resource set includes a first CSI-IM resource, and interference measurement for the first CSI-IM resource is used for calculating the first CSI; and a frequency-domain resource occupied by the first CSI-IM resource is a plurality of contiguous RBs.

In an embodiment, the first CSI-IM resource occupies each RB of the first frequency-domain resource.

This application discloses a method applied to a second node configured for wireless communication, including:
sending a first message, where the first message indicates a first CSI-RS resource set, and the first CSI-RS resource set includes a first CSI-RS resource.

A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

Specifically, according to one aspect of the present invention, the method includes:
receiving first CSI.

Measurement performed on the first CSI-RS resource is used for calculating the first CSI; and the first CSI-RS resource is identified by one *NZP-CSI-RS-ResourceId,* and the measurement performed on the first CSI-RS resource includes channel measurement or interference measurement.

In an embodiment, the second node sends a reference signal over the first CSI-RS resource.

Specifically, according to one aspect of the present invention, the method includes:
sending a first PDSCH.

The first CSI-RS resource is used for determining an RE occupied by the first PDSCH, and the RE occupied by the first PDSCH does not include an RE of the first CSI-RS resource; and the first CSI-RS resource is identified by one *ZP-CSI-RS-ResourceId.*

Specifically, according to one aspect of the present invention, each of the at least two RB sets is indicated by one *CSI-FrequencyOccupation.*

Specifically, according to one aspect of the present invention, the first CSI-RS resource set includes a second CSI-RS resource, the second CSI-RS resource occupies only one RB set, and the one RB set includes a plurality of contiguous RBs.

Specifically, according to one aspect of the present invention, the method includes:
receiving a second message.

The second message is used for determining a configuration of the first CSI-RS resource, and the second message indicates a capability of a first node.

Specifically, according to one aspect of the present invention, the method includes:
sending a third message.

The third message indicates a first reporting configuration, and the first reporting configuration is applied to the first CSI; and the first reporting configuration indicates that the CSI for a first frequency-domain resource is to be reported, and the first frequency-domain resource includes at least one RB that does not belong to the frequency-domain resource across which the first CSI-RS resource spans.

Specifically, according to one aspect of the present invention, the third message indicates a first CSI-IM resource set, the first CSI-IM resource set includes a first CSI-IM resource, and interference measurement for the first CSI-IM resource is used for calculating the first CSI; and a frequency-domain resource occupied by the first CSI-IM resource is a plurality of contiguous RBs.

This application discloses a first node configured for wireless communication, including:
a first receiver, configured to receive a first message, where the first message indicates a first CSI-RS resource set, and the first CSI-RS resource set includes a first CSI-RS resource.

A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

This application discloses a second node configured for wireless communication, including:
a second transmitter, configured to send a first message, where the first message indicates a first CSI-RS resource set, and the first CSI-RS resource set includes a first CSI-RS resource.

A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

### BRIEF DESCRIPTION OF THE DRAWINGS

Other features, objectives, and advantages of the present invention become more apparent by reading detailed descriptions of non-limiting embodiments made with reference to the following accompanying drawings:
FIG. 1 is a flowchart of transmitting first CSI according to an embodiment of the present invention;
FIG. 2 is a schematic diagram of a network architecture according to an embodiment of the present invention;
FIG. 3 is a schematic diagram of an embodiment of radio protocol architectures for a user plane and a control plane according to an embodiment of the present invention;
FIG. 4 is a schematic diagram of hardware modules of a communication node according to an embodiment of the present invention;
FIG. 5 is a flowchart of transmission between a first node and a second node according to an embodiment of the present invention;
FIG. 6 is a flowchart of transmission between a first node and a second node according to another embodiment of the present invention;
FIG. 7 is a schematic diagram of a first frequency-domain resource according to an embodiment of the present invention;
FIG. 8 is a schematic diagram of RB sets according to an embodiment of the present invention;
FIG. 9 is a block diagram of a structure of a processing apparatus used in a first node according to an embodiment of the present invention; and
FIG. 10 is a block diagram of a structure of a processing apparatus used in a second node according to an embodiment of the present invention.

### DETAILED DESCRIPTION

Technical solutions of this application are further described in detail with reference to accompanying drawings below. It should be noted that embodiments and features in the embodiments in this application may be arbitrarily and mutually combined without conflict.

### Embodiment 1

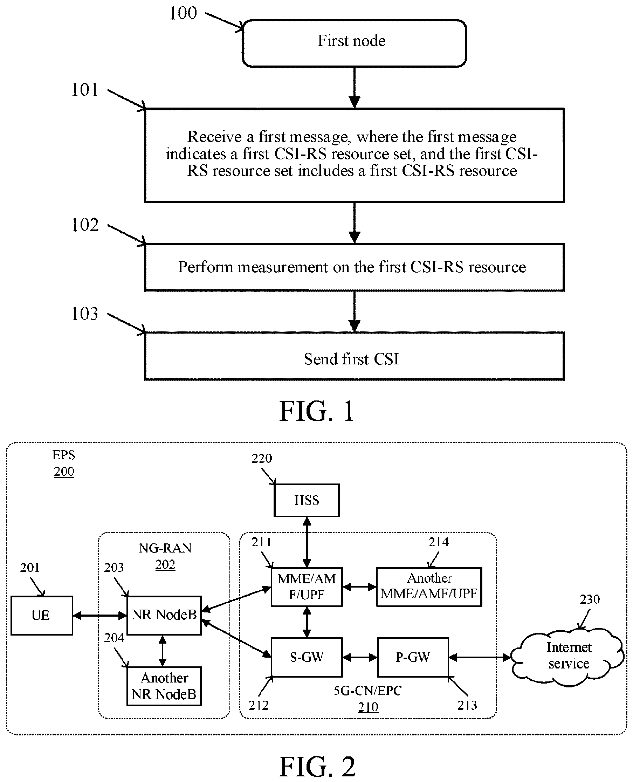

Embodiment 1 illustrates a flowchart of transmitting first CSI according to an embodiment of this application, as shown in FIG. 1.

A first node 100 receives a first message in step 101, where the first message indicates a first CSI-RS resource set, and the first CSI-RS resource set includes a first CSI-RS resource; performs measurement on the first CSI-RS resource in step 102; and sends first CSI in step 103.

In Embodiment 1, the measurement performed on the first CSI-RS resource is used for calculating the first CSI; and a frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the first message is higher layer signaling.

In an embodiment, the first message is radio resource control (RRC) layer signaling.

In an embodiment, the first message includes at least one RRC layer information element (IE).

In an embodiment, the first message includes an *NZP-CSI-RS-ResourceSet.*

In a sub-embodiment of the foregoing embodiment, the first message includes a *CSI-MeasConfig.*

In an embodiment, the first message includes a *ZP-CSI-RS-ResourceSet.*

In a sub-embodiment of the foregoing embodiment, the first message includes a *PDSCH-Config.*

In an embodiment, the measurement performed on the first CSI-RS resource includes channel measurement.

In an embodiment, the measurement performed on the first CSI-RS resource includes interference measurement.

In an embodiment, the first CSI-RS resource set includes only the first CSI-RS resource.

In an embodiment, density of the first CSI-RS resource is not less than 1, and the frequency-domain resource across which the first CSI-RS resource spans is an RB occupied by the first CSI-RS resource.

In an embodiment, density of the first CSI-RS resource is 0.5, and the first CSI-RS resource occupies all odd RBs or all even RBs in the frequency-domain resource across which the first CSI-RS resource spans.

The RB in this application is also sometimes referred to as a physical RB (PRB).

In an embodiment, the RB in this application includes 12 contiguous subcarriers in frequency domain.

In an embodiment, density of one CSI-RS resource is a quantity of REs occupied per PRB per port for the one CSI-RS resource.

In an embodiment, density of one CSI-RS resource is indicated by *CSI-RS-ResourceMapping* for configuring the one CSI-RS resource.

In an embodiment, density of one CSI-RS resource is indicated by a *density* field in *CSI-RS-ResourceMapping* for configuring the one CSI-RS resource.

In an embodiment, a quantity of RBs included in one RB set is a positive integer multiple of 4.

In an embodiment, an index of a starting RB occupied in any one of the at least two RB sets is 0 or a positive integer multiple of 4.

In an embodiment, an index of the foregoing starting RB is in relation to a CRB #0 on a common RB grid.

The foregoing two embodiments enable the first CSI-RS resource to have better compatibility, and reduce hardware complexity of the first node.

In an embodiment, the first CSI includes a CRI.

In an embodiment, the first CSI includes a CQI.

In a sub-embodiment of the foregoing embodiment, the first CSI includes an RI and a PMI.

In an embodiment, the first CSI includes an L1-SINR.

In an embodiment, each of the at least two RB sets is indicated by one *CSI-FrequencyOccupation.*

In a sub-embodiment of the foregoing embodiment, the first CSI-RS resource is configured by one *CSI-RS-ResourceMapping* IE, the one *CSI-RS-ResourceMapping* IE includes a plurality of *CSI-FrequencyOccupation*, and the plurality of *CSI-FrequencyOccupation* are in one-to-one correspondence with RB sets in the at least two RB sets.

The advantage of the foregoing method lies in maximal reuse of an existing signaling structure while maintaining good compatibility.

In an embodiment, there is no single RB that simultaneously belongs to two of the at least two RB sets.

In an embodiment, a quantity of RBs included in a frequency-domain spacing between any two of the at least two RB sets is a positive integer multiple of 4.

In an embodiment, the first CSI-RS resource set includes a second CSI-RS resource, the second CSI-RS resource occupies only one RB set, and the one RB set includes a plurality of contiguous RBs.

In an embodiment, the one RB set is indicated by one *CSI-FrequencyOccupation.*

Usually, how to calculate CSI is determined by a hardware equipment vendor. The following introduces a non-limiting implementation by taking a CQI as an example:
A first Node 100 first performs channel measurement on one CSI-RS resource to obtain a channel parameter matrix *H*_{*r*×*t*}, where *r* and *t* are respectively a plurality of receive antennas and a quantity of antenna ports for sending. When a precoding matrix *W*_{*t*×*l*} is used, an encoded channel parameter matrix is *H*_{*r*×*t*} · *W*_{*t*×*l*}, where *l* is a quantity of ranks or layers. An equivalent channel capacity of *H*_{*r*×}*ₜ · W*_{*t*×*l*} is calculated by using a criterion, for example, an SINR, exponential effective SINR mapping (EESM), or a received block mean mutual information ratio (RBIR), and then a first CQI is determined by mapping the equivalent channel capacity via a lookup a table or the like. Usually, the calculation of the equivalent channel capacity requires the first node 100 to estimate noise and interference, and the measurement performed on the first CSI-RS resource includes channel measurement or interference measurement and is used for estimating at least one of the interference and the noise. Generally, direct mapping of the equivalent channel capacity to a CQI value depends on performance of a receiver or a hardware-related factor such as a modulation scheme. The precoding matrix *W*_{*t*×*l*} is usually fed back by the first node by using an RI or a PMI.

Compared with a CQI, L1-SINR does not carry information about the receiver, and therefore, the calculation of the equivalent channel capacity described above is omitted.

### Embodiment 2

Embodiment 2 illustrates a schematic diagram of a network architecture according to an embodiment of this application, as shown in FIG. 2. FIG. 2 illustrates a system architecture of 5G NR, long-term evolution (LTE), and long-term evolution advanced (LTE-A). 5G NR or an LTE network architecture 200 may be referred to as a/an 5G system (5GS)/evolved packet system (EPS) or another suitable term. An EPS 200 may include a user equipment (UE) 201, a next generation-radio access network (NG-RAN) 202, a/an 5G-core network (5G-CN)/evolved packet core (EPC) 210, a home subscriber server (HSS) 220, and an internet service 230. The EPS may be interconnected with another access network, but these entities/interfaces are not shown for simplicity. As shown in FIG. 2, the EPS provides a packet-switched service. However, a person skilled in the art readily appreciates that various concepts presented throughout this application are extensible to a network providing a circuit-switched service or another cellular network. The NG-RAN includes an NR NodeB (gNB) 203 and another gNB 204. The gNB 203 provides user and control plane protocol termination towards the UE 201. The gNB 203 may be connected to the another gNB 204 through an Xn interface (for example, backhaul). The gNB 203 may also be referred to as a base station, a base transceiver station, a radio base station, a radio transceiver, a transceiver function, a basic service set (BSS), an extended service set (ESS), a transmitter receiver point (TRP), or another suitable term. The gNB 203 provides the UE 201 with an access point to the 5G-CN/EPC 210. Examples of the UE 201 include a cellular phone, a smartphone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrowband internet of things device, a machine-type communication device, a land vehicle, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The gNB 203 is connected to the 5G-CN/EPC 210 through an S1/NG interface. The 5G-CN/EPC 210 includes a/an mobility management entity (MME)/authentication management field (AMF)/user plane function (UPF) 211, another MME/AMF/UPF 214, a service gateway (S-GW) 212, and a packet data network gateway (P-GW) 213. The MME/AMF/UPF 211 is a control node that processes signaling between the UE 201 and the 5G-CN/EPC 210. Generally, the MME/AMF/UPF 211 provides bearer and connection management. All user internet protocol (IP) packets are transmitted through the S-GW 212, and the S-GW 212 is connected to the P-GW 213. The P-GW 213 provides UE IP address assignment and other functions. The P-GW 213 is connected to the internet service 230. The internet service 230 includes operator-corresponding internet protocol services, which may specifically include internet, intranet, IP multimedia subsystem (IMS), and packet-switched streaming services.

In an embodiment, the UE 201 corresponds to a first node in this application, and the gNB 203 corresponds to a second node in this application.

In an embodiment, the UE 201 supports generating CSI by using artificial intelligence (AI) or deep learning.

Typically, the generating the CSI includes compressing the CSI.

In an embodiment, the UE 201 is a terminal supporting massive-multiple input multiple output (Massive-MIMO).

In an embodiment, the gNB 203 supports Massive-MIMO based transmission.

In an embodiment, the gNB 203 supports decompressing CSI by using AI or deep learning.

In an embodiment, the gNB 203 is a macro cellular base station.

In an embodiment, the gNB 203 is a micro cell base station.

In an embodiment, the gNB 203 is a picocell base station.

In an embodiment, the gNB 203 is a femtocell.

In an embodiment, the gNB 203 is a base station that supports a large delay difference.

In an embodiment, the gNB 203 is a flying platform device.

In an embodiment, the gNB 203 is a satellite device.

In an embodiment, the first node and the second node in this application are respectively the UE 201 and the gNB 203.

### Embodiment 3

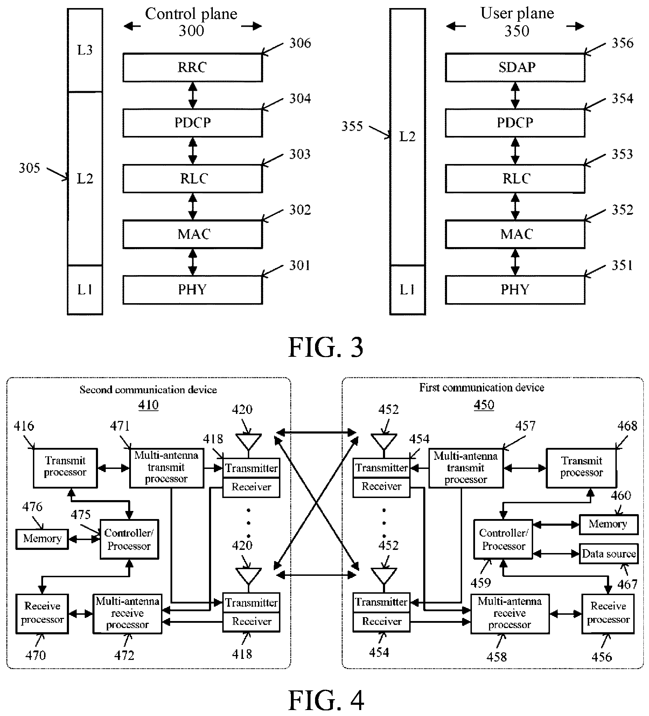

Embodiment 3 shows a schematic diagram of an embodiment of radio protocol architectures for a user plane and a control plane according to this application, as shown in FIG. 3. FIG. 3 is a schematic diagram illustrating an embodiment of radio protocol architectures for a user plane 350 and a control plane 300. FIG. 3 shows a radio protocol architecture for a control plane 300 between a first node device (a road side unit (RSU) in a UE or vehicle to everything (V2X), an in-vehicle device, or an in-vehicle communication module) and a second node device (gNB, an RSU in a UE or V2X, an in-vehicle device, or an in-vehicle communication module) or between two UEs with three layers: Layer 1 (L1), Layer 2 (L2), and Layer 3 (L3). L1 is a lowest layer and implements various physical layer (PHY) signal processing functions. L1 is referred to as a PHY 301 in this specification. L2 305 is on top of the PHY 301, and is responsible for a link between the first node device and the second node device, as well as between the two UEs, through the PHY 301. L2 305 includes a Media Access Control (MAC) sublayer 302, a radio link control (RLC) sublayer 303, and a packet data convergence protocol (PDCP) sublayer 304, and these sublayers terminate at the second node device. The PDCP sublayer 304 provides data encryption and integrity protection, and the PDCP sublayer 304 further provides cross-area mobility support of the first node device to the second node device. The RLC sublayer 303 provides segmentation and reassembly of data packets, and realizes retransmission of a lost data packet by using an ARQ (Automatic Repeat-reQuest), and the RLC sublayer 303 further provides duplicate data packet detection and protocol error detection. The MAC sublayer 302 provides mapping between a logical channel and a transport channel and multiplexing of a logical channel. The MAC sublayer 302 is further responsible for allocating various radio resources (for example, resource blocks) within one cell among first node devices. The MAC sublayer 302 is also responsible for hybrid ARQ (HARQ) operations. An RRC sublayer 306 in L3 in the control plane 300 is responsible for obtaining radio resources (for example, radio bearers) and configuring a lower layer by using RRC signaling between the second node device and the first node device. A radio protocol architecture for a user plane 350 includes L1 and L2 355. For the user plane 350 between the first node device and the second node device, the radio protocol architecture is substantially identical to corresponding layers and sublayers in the control plane 300 with respect to a PHY layer 351, a PDCP sublayer 354 in L2 355, an RLC sublayer 353 in L2 355, and a MAC sublayer 352 in L2 355, except that the PDCP sublayer 354 additionally provides header compression for higher-layer packets to reduce wireless transmission overheads. L2 355 in the user plane 350 further includes a service data adaptation protocol (SDAP) sublayer 356, and the SDAP sublayer 356 is responsible for mapping between a quality of service (QoS) flow and a data radio bearer (DRB), to support service diversity. Although not illustrated, the first node device may have several higher layers on top of L2 355, and the higher layers include a network layer (for example, an IP layer) terminating at a P-GW on a network side and an application layer terminating at the other end of the connection (for example, a remote UE or a server).

In an embodiment, the radio protocol architecture in FIG. 3 is applicable to a first node in this application.

In an embodiment, the radio protocol architecture in FIG. 3 is applicable to a second node in this application.

In an embodiment, first CSI in this application is generated in the PHY 301.

In an embodiment, a first PDSCH in this application is generated in the PHY 301.

In an embodiment, a first message in this application is generated in the RRC sublayer 306.

In an embodiment, a second message in this application is generated in the RRC sublayer 306.

In an embodiment, a third message in this application is generated in the RRC sublayer 306.

### Embodiment 4

Embodiment 4 illustrates a schematic diagram of hardware modules of a communication node according to an embodiment of this application, as shown in FIG. 4. FIG. 4 is a block diagram of a first communication device 450 and a second communication device 410 that communicate with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

In a transmission from the second communication device 410 to the first communication device 450, at the second communication device 410, a higher-layer data packet from a core network is provided to the controller/processor 475. The controller/processor 475 implements functionality for L2. In the transmission from the second communication device 410 to the first communication device 450, the controller/processor 475 provides header compression, encryption, packet segmentation and reordering, multiplexing between a logic channel and a transport channel, and radio resource allocation to the first communication device 450 based on various priority metrics. The controller/processor 475 is further responsible for retransmission of a lost packet, and signaling to the first communication device 450. The transmit processor 416 and the multi-antenna transmit processor 471 implement various signal processing functions for L1 (for example, a physical layer). The transmit processor 416 implements channel coding and interleaving to facilitate forward error correction (FEC) at the second communication device 410, and performs signal constellation mapping based on various modulation schemes (such as binary phase shift keying (BPSK), quadrature phase shift keying (QPSK), M-ary Phase Shift Keying (M-PSK), M-ary quadrature amplitude modulation (M-QAM)). The multi-antenna transmit processor 471 performs digital spatial precoding, including codebook-based precoding and non-codebook-based precoding, on an encoded and modulated symbol, and beamforming processing, to generate one or more spatial streams. The transmit processor 416 then maps each spatial stream to a subcarrier, multiplexes the subcarrier with a reference signal (for example, a pilot) in time domain and/or frequency domain, and then uses inverse fast Fourier transform (IFFT) to generate a physical channel carrying a time-domain multi-carrier symbol stream. Subsequently, the multi-antenna transmit processor 471 performs a transmission analog precoding/beamforming operation on the time-domain multi-carrier symbol stream. Each transmitter 418 converts a baseband multi-carrier symbol stream provided by the multi-antenna transmit processor 471 into a radio frequency stream, and then provides the radio frequency stream to different antennas 420.

In the transmission from the second communication device 410 to the first communication device 450, at the first communication device 450, each receiver 454 receives a signal through an antenna 452 corresponding to the receiver. Each receiver 454 recovers information modulated onto a radio frequency carrier, converts a radio frequency stream into a baseband multi-carrier symbol stream, and provides the baseband multi-carrier symbol stream to the receive processor 456. The receive processor 456 and the multi-antenna receive processor 458 implement various signal processing functions for L1. The multi-antenna receive processor 458 performs a reception analog precoding/beamforming operation on the baseband multi-carrier symbol stream from the receiver 454. The receive processor 456 uses fast Fourier transform (FFT) to convert a baseband multi-carrier symbol stream obtained through the reception analog precoding/beamforming operation from time domain to frequency domain. In frequency domain, a physical layer data signal and a reference signal are demultiplexed by the receive processor 456, where the reference signal is to be used for channel estimation, and the data signal is detected by multiple antennas in the multi-antenna receive processor 458 to recover any spatial stream destined for the first communication device 450. A symbol on each spatial stream is demodulated and recovered in the receive processor 456, and a soft decision is generated. Subsequently, the receive processor 456 deinterleaves and channel-decodes the soft decision to recover higher-layer data and a control signal transmitted by the second communication device 410 on a physical channel. Then, the higher-layer data and the control signal are provided to the controller/processor 459. The controller/processor 459 implements functions for L2. The controller/processor 459 may be associated with a memory 460 that stores program code and data. The memory 460 may be referred to as a computer-readable medium. In a transmission from the second communication device 410 to a second node 450, the controller/processor 459 provides demultiplexing between a transport channel and a logical channel, packet reassembly, decryption, header decompression, control signal processing to recover the higher-layer data packet from the core network. The higher-layer packet is then provided to all protocol layers on top of L2. Various control signals may also be provided to L3 for L3 processing.

In a transmission from the first communication device 450 to the second communication device 410, at the first communication device 450, the data source 467 is used to provide a higher-layer data packet to the controller/processor 459. The data source 467 represents all protocol layers on top of L2. Similar to a transmission function at the second communication device 410 in the transmission from the second communication device 410 to the first communication device 450, the controller/processor 459 implements header compression, encryption, packet segmentation and reordering, and multiplexing between a logic channel and a transport channel based on radio resource allocation, and implements the functions for L2 for a user plane and a control plane. The controller/processor 459 is further responsible for retransmission of a lost packet, and signaling to the second communication device 410. The transmit processor 468 performs channel coding, interleaving, and modulation mapping, and the multi-antenna transmit processor 457 performs digital multi-antenna spatial precoding, including codebook-based precoding and non-codebook-based precoding, and beamforming processing. Subsequently, the transmit processor 468 modulates a generated spatial stream into a multi-carrier/single-carrier symbol stream, and a multi-carrier/single-carrier symbol stream obtained through an/a analog precoding/beamforming operation in the multi-antenna transmit processor 457 is provided to different antennas 452 through the transmitter 454. Each transmitter 454 first converts a baseband symbol stream provided by the multi-antenna transmit processor 457 into a radio frequency symbol stream, and then provides the radio frequency symbol stream to the antenna 452.

In the transmission from the first communication device 450 to the second communication device 410, a function at the second communication device 410 is similar to a reception function at the first communication device 450 in the transmission from the second communication device 410 to the first communication device 450. Each receiver 418 receives a radio frequency signal through an antenna 420 corresponding to the receiver, converts the received radio frequency signal into a baseband signal, and provides the baseband signal to the multi-antenna receive processor 472 and the receive processor 470. The receive processor 470 and the multi-antenna receive processor 472 jointly implement functions for L1. The controller/processor 475 implements functions for L2. The controller/processor 475 may be associated with a memory 476 that stores program code and data. The memory 476 may be referred to as a computer-readable medium. In the transmission from the first communication device 450 to the second communication device 410, the controller/processor 475 provides demultiplexing between a transport channel and a logical channel, packet reassembly, decryption, header decompression, and control signal processing to recover a higher-layer data packet from the first communication device 450. The higher-layer packet from the controller/processor 475 may be provided to the core network.

In an embodiment, the first communication device 450 includes: at least one processor and at least one memory. The at least one memory includes computer program code. The at least one memory and the computer program code are configured for use with the at least one processor. The first communication device 450 at least: receives a first message, where the first message indicates a first CSI-RS resource set, and the first CSI-RS resource set includes a first CSI-RS resource. A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the first communication device 450 includes: a memory that stores a computer-readable instruction program. The computer-readable instruction program generates an action when executed by at least one processor. The action includes: receiving a first message, where the first message indicates a first CSI-RS resource set, and the first CSI-RS resource set includes a first CSI-RS resource. A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the second communication device 410 includes: at least one processor and at least one memory. The at least one memory includes computer program code. The at least one memory and the computer program code are configured for use with the at least one processor. The second communication device 410 at least: sends a first message, where the first message indicates a first CSI-RS resource set, and the first CSI-RS resource set includes a first CSI-RS resource. A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the second communication device 410 includes: a memory that stores a computer-readable instruction program. The computer-readable instruction program generates an action when executed by at least one processor. The action includes: sending a first message, where the first message indicates a first CSI-RS resource set, and the first CSI-RS resource set includes a first CSI-RS resource. A frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the first communication device 450 corresponds to a first node in this application.

In an embodiment, the second communication device 410 corresponds to a second node in this application.

In an embodiment, the first communication device 450 is a UE, and the second communication device 410 is a base station.

In an embodiment, the antenna 452, the receiver 454, the multi-antenna receive processor 458, the receive processor 456, and the controller/processor 459 are configured to receive the first message.

In an embodiment, the antenna 452, the receiver 454, the multi-antenna receive processor 458, the receive processor 456, and the controller/processor 459 are configured to receive a third message.

In an embodiment, the antenna 452, the receiver 454, the multi-antenna receive processor 458, the receive processor 456, and the controller/processor 459 are configured to receive a first PDSCH.

In an embodiment, the antenna 452, the transmitter 454, the multi-antenna transmit processor 457, the transmit processor 468, and the controller/processor 459 are configured to send first CSI.

In an embodiment, the antenna 452, the transmitter 454, the multi-antenna transmit processor 457, the transmit processor 468, and the controller/processor 459 are configured to send a second message.

In an embodiment, the antenna 420, the transmitter 418, the multi-antenna transmit processor 471, the transmit processor 416, and the controller/processor 475 are configured to send the first message.

In an embodiment, the antenna 420, the transmitter 418, the multi-antenna transmit processor 471, the transmit processor 416, and the controller/processor 475 are configured to send the third message.

In an embodiment, the antenna 420, the transmitter 418, the multi-antenna transmit processor 471, the transmit processor 416, and the controller/processor 475 are configured to send the first PDSCH.

In an embodiment, the antenna 420, the receiver 418, the multi-antenna receive processor 472, the receive processor 470, and the controller/processor 475 are configured to receive the first CSI.

In an embodiment, the antenna 420, the receiver 418, the multi-antenna receive processor 472, the receive processor 470, and the controller/processor 475 are configured to receive the second message.

### Embodiment 5

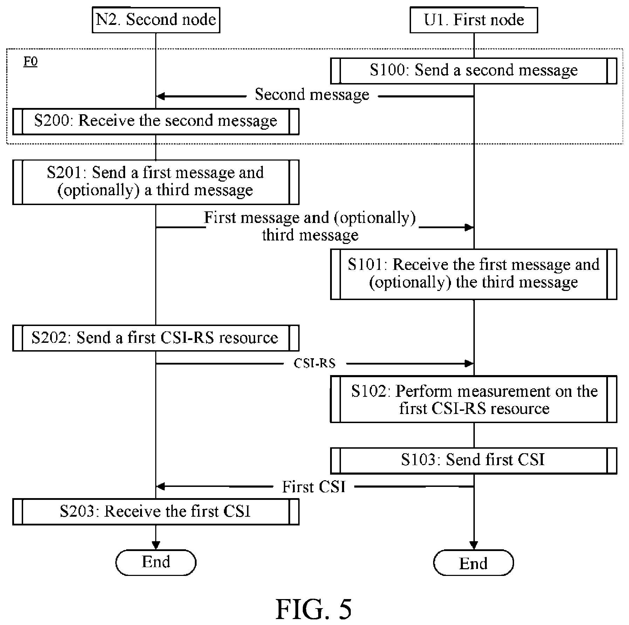

Embodiment 5 illustrates a flowchart of transmission between a first node and a second node according to an embodiment of this application, as shown in FIG. 5. In FIG. 5, steps in a block F0 are optional. In FIG. 5, the first node U1 and the second node N2 communicate through a radio link. It should be particularly noted that the order in this embodiment does not constitute a limitation on the orders of signal transmissions and implementations in this application.

For the first node U1: Step S100: Send a second message. Step S101: Receive a first message, where the first message indicates a first CSI-RS resource set, and the first CSI-RS resource set includes a first CSI-RS resource. Step S102: Perform measurement on the first CSI-RS resource. Step S103: Send first CSI.

For the second node N2: Step S200: Receive the second message. Step S201: Send the first message. Step S202: Send a CSI-RS on the first CSI-RS resource. Step S203: Receive the first CSI.

In Embodiment 5, the measurement performed on the first CSI-RS resource is used for calculating the first CSI. The first CSI-RS resource is identified by one *NZP-CSI-RS-ResourceId*, and the measurement performed on the first CSI-RS resource includes channel measurement or interference measurement. A frequency-domain resource occupied by the first CSI-RS resource includes at least two RB sets, each of the at least two RB sets includes a plurality of RBs that are contiguous in frequency domain, and any two of the at least two RB sets are discontinuous in frequency domain. The second message is used for determining a configuration of the first CSI-RS resource, and the second message indicates a capability of the first node.

In an embodiment, the second message is RRC layer signaling.

In an embodiment, the second message belongs to *UE-CapabilityRAT-Container.*

In an embodiment, the second message belongs to a *UE-NR-Capability* IE.

In an embodiment, the second message belongs to a *FeatureSetDownlink* IE.

The foregoing embodiment has an advantage that a capability of supporting discontiguous CSI-RS resources can be independently configured for each frequency band, thereby improving flexibility or reducing hardware complexity.

In an embodiment, the second message indicates that the first node U1 supports one CSI-RS resource that spans across discontiguous RBs.

In an embodiment, the second message indicates that the first node U1 supports one CSI-RS resource that spans across discontiguous RBs and one CSI-IM resource that occupies discontiguous RBs.

In an embodiment, the second message indicates that the first node U1 supports that at least two CSI-IM resources in one CSI-IM resource set occupy different frequency-domain resources.

The indication of the second message may be explicit or implicit.

In an embodiment, the first message is higher layer signaling.

In an embodiment, the first message is RRC layer signaling.

In an embodiment, the first message includes at least one RRC layer IE.

In an embodiment, the first message includes an *NZP-CSI-RS-ResourceSet.*

In a sub-embodiment of the foregoing embodiment, the first message includes a *CSI-MeasConfig.*

In an embodiment, the second node N2 sends a reference signal in the first CSI-RS resource, and the measurement for the first CSI-RS resource is channel measurement.

In an embodiment, the second node N2 sends a reference signal in the first CSI-RS resource, and the measurement for the first CSI-RS resource is interference measurement.

In an embodiment, the frequency-domain resource occupied by the first CSI-RS resource belongs to a first bandwidth part (BWP).

In an embodiment, the second node N2 sends a third message in step S201, and the first node U1 receives the third message in step S101. The third message indicates a first reporting configuration, and the first reporting configuration is applied to the first CSI. The first reporting configuration indicates that the CSI for a first frequency-domain resource is to be reported, and the first frequency-domain resource includes at least one RB that does not belong to the frequency-domain resource across which the first CSI-RS resource spans.

In an embodiment, the third message is higher layer signaling.

In an embodiment, the third message is RRC layer signaling.

In an embodiment, the third message includes at least one RRC IE.

In an embodiment, the third message includes one *CSI-ReportConfig* IE.

In an embodiment, the first frequency-domain resource is indicated by *csi-ReportingBand* in the third message.

In an embodiment, the first frequency-domain resource includes at least one subband.

In an embodiment, the first frequency-domain resource includes at least one subband in the first BWP.

In an embodiment, among subbands, a same quantity of RBs is included in a subband other than a subband located at an edge of the first BWP.

In an embodiment, among subbands, a quantity of RBs included in a subband other than a subband located at an edge of the first BWP increases as a bandwidth of the first BWP increases.

In an embodiment, a quantity of subbands included in the first BWP does not exceed 19.

It should be noted that, unless otherwise emphasized, the "subband" configured in the third message is independent of a "subband" in SBFD, and the latter is a broader concept currently under discussion.

In an embodiment, the third message indicates a first CSI-IM resource set, the first CSI-IM resource set includes a first CSI-IM resource, and interference measurement for the first CSI-IM resource is used for calculating the first CSI. A frequency-domain resource occupied by the first CSI-IM resource is a plurality of contiguous RBs.

In an embodiment, the first CSI-IM resource set includes only the first CSI-IM resource.

The RB in this application is also sometimes referred to as a PRB.

In an embodiment, the RB in this application includes 12 contiguous subcarriers in frequency domain.

In an embodiment, a quantity of RBs included in one RB set is a positive integer multiple of 4.

In an embodiment, the first message and the third message are transmitted on a physical downlink shared channel (PDSCH), and the second message is transmitted on a physical uplink shared channel (PUSCH).

In an embodiment, the first node U1 and the second node N2 are respectively a UE and a base station.

### Embodiment 6

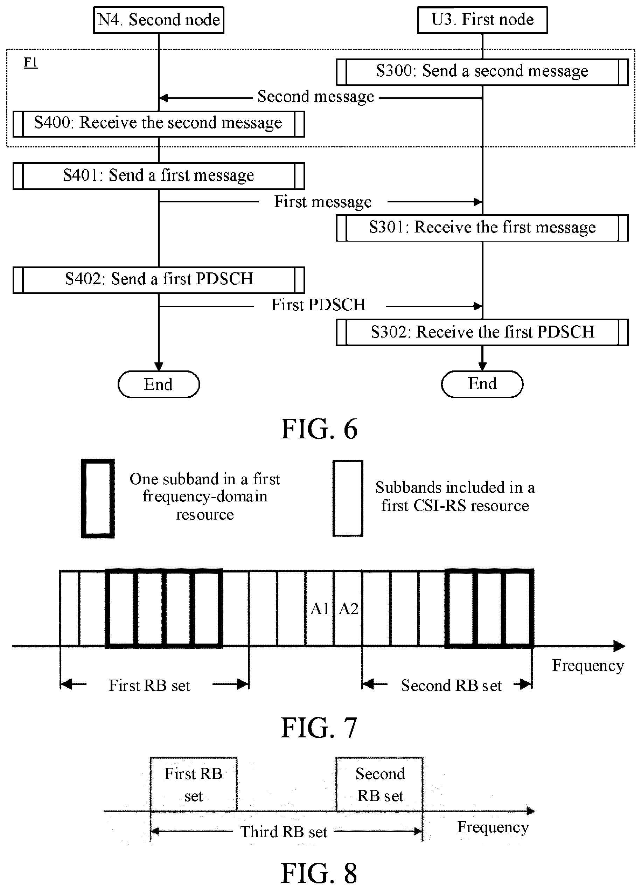

Embodiment 6 illustrates a flowchart of transmission between a first node and a second node according to another embodiment of this application, as shown in FIG. 6. In FIG. 6, steps in a block F1 are optional. In FIG. 6, the first node U3 and the second node N4 communicate through a radio link. It should be particularly noted that the order in this embodiment does not constitute a limitation on the orders of signal transmissions and implementations in this application.

For the first node U3: Step S300: Send a second message. Step S301: Receive a first message. Step S302: Receive a first PDSCH.

For the second node N4: Step S400: Receive the second message. Step S401: Send the first message. Step S402: Send the first PDSCH.

In Embodiment 6, the first message indicates a first CSI-RS resource set, and the first CSI-RS resource set includes a first CSI-RS resource. The first CSI-RS resource is used for determining an RE occupied by the first PDSCH, and the RE occupied by the first PDSCH does not include an RE of the first CSI-RS resource. The first CSI-RS resource is identified by one *ZP-CSI-RS-Resourceld.* The second message is used for determining a configuration of the first CSI-RS resource, and the second message indicates a capability of the first node.

In an embodiment, the second message is RRC layer signaling.

In an embodiment, the second message belongs to *UE-CapabilityRAT-Container.*

In an embodiment, the second message belongs to a *UE-NR-Capability* IE.

In an embodiment, the second message belongs to a *FeatureSetDownlink* IE.

The foregoing embodiment has an advantage that a capability of supporting discontiguous CSI-RS resources can be independently configured for each frequency band, thereby improving flexibility or reducing hardware complexity.

In an embodiment, the second message indicates that the first node U1 supports one CSI-RS resource that spans across discontiguous RBs.

In an embodiment, the second message indicates that the first node U1 supports one CSI-RS resource that spans across discontiguous RBs and one CSI-IM resource that occupies discontiguous RBs.

In an embodiment, the second message indicates that the first node U1 supports that at least two CSI-IM resources in one CSI-IM resource set occupy different frequency-domain resources.

The indication of the second message may be explicit or implicit.

In an embodiment, the first message is higher layer signaling.

In an embodiment, the first message is RRC layer signaling.

In an embodiment, the first message includes at least one RRC layer IE.

In an embodiment, the first message includes a *ZP-CSI-RS-ResourceSet.*

In a sub-embodiment of the foregoing embodiment, the first message includes a *PDSCH-Config.*

In an embodiment, the RE across which the first CSI-RS resource spans is a rate matching RE (RMRE).

In an embodiment, the first message is transmitted on a PDSCH, and the second message is transmitted on a PUSCH.

In an embodiment, the first node U3 and the second node N4 are respectively a UE and a base station.

### Embodiment 7

Embodiment 7 illustrates a schematic diagram of a first frequency-domain resource according to an embodiment of this application, as shown in FIG. 7. In FIG. 7, one small square represents one subband, one small square identified by a thick wireframe represents one subband of the first frequency-domain resource, and one small square filled with gray represents a subband included in a first CSI-RS resource.

In Embodiment 7, a frequency-domain resource occupied by the first CSI-RS resource includes a first RB set and a second RB set, and the first RB set and the second RB set belong to a first BWP.

In an embodiment, a quantity of PRBs included in a subband in the first BWP other than an edgemost subband in the first BWP is P1, and P1 is a positive integer multiple of 4.

In an embodiment, P1 is indicated by higher layer signaling.

In an embodiment, P1 relates to a quantity of PRBs included in the first BWP.

In an embodiment, each bit in *csi-ReportingBand* in the third message indicates whether CSI is fed back for one subband in the first BWP.

In an embodiment, first CSI is for one subband in the first BWP.

In an embodiment, the first CSI is wideband, for example, is for all subbands in the first frequency-domain resource.

In an embodiment, that the first CSI is for one frequency-domain resource (or subband) includes: The first CSI reflects channel quality on the one frequency-domain resource (or subband).

In an embodiment, that the first CSI is for one frequency-domain resource (or subband) includes: channel measurement and interference measurement on the one frequency-domain resource (or subband) are used for calculating the first CSI.

In an embodiment, the first CSI is for one frequency-domain resource (or subband) includes: It is assumed that a PDSCH is sent on the one frequency-domain resource (or subband), and the first CSI indicates a modulation and coding scheme required for the PDSCH to obtain a blocking error rate not higher than a specific blocking error rate (BLER).

In an embodiment, the specific BLER is not greater than 0.1.

In an embodiment, the specific BLER is 0.1.

In an embodiment, the first node performs channel measurement and interference measurement by using another resources for a subband in the first frequency-domain resource and outside the first CSI-RS resource.

In an embodiment, the another resource includes one CSI-RS resource other than the first CSI-RS resource.

In an embodiment, the another resource includes one CSI-IM resource.

In an embodiment, the another resource is determined by the first node (that is, is not configured by a network device).

In an embodiment, the subband in the first frequency-domain resource and outside the first CSI-RS resource includes subbands identified by A1 and A2 in FIG. 7.

In an embodiment, the third message indicates a first CSI-IM resource set, the first CSI-IM resource set includes a first CSI-IM resource, and interference measurement for the first CSI-IM resource is used for calculating the first CSI. A frequency-domain resource occupied by the first CSI-IM resource is a plurality of contiguous RBs.

### Embodiment 8

Embodiment 8 illustrates a schematic diagram of RB sets according to an embodiment of the present invention, as shown in FIG. 8. In FIG. 8, a first RB set, a second RB set, and a third RB set belong to a first BWP.

In Embodiment 8, a frequency-domain resource across which a first CSI-RS resource spans includes the first RB set and the second RB set in the first BWP, but does not include an RB between the first RB set and the second RB set.

In an embodiment, a third message indicates a first CSI-IM resource set, the first CSI-IM resource set includes a first CSI-IM resource, and interference measurement for the first CSI-IM resource is used for calculating first CSI. A frequency-domain resource occupied by the first CSI-IM resource is the third RB set.

In an embodiment, interference measurement for a first CSI-IM resource is used for calculating first CSI; and the first CSI-IM resource is associated with the first CSI-RS resource and another resource.

In an embodiment, for an RB or a subband between the first RB set and the second RB set, calculation of CSI fed back by a first node depends on interference measurement performed for the first CSI-IM resource; and a frequency-domain resource occupied by the another resource or a frequency-domain resource across which the another resource spans includes each RB between the first RB set and the second RB set.

In an embodiment, the another resource includes one CSI-RS resource other than the first CSI-RS resource.

In an embodiment, the another resource includes one CSI-IM resource.

In an embodiment, the another resource is determined by the first node (that is, is not configured by a network device).

### Embodiment 9

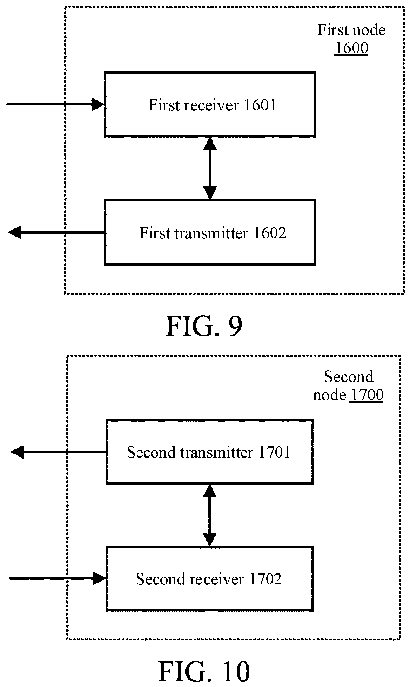

Embodiment 9 illustrates a block diagram of a structure of a processing apparatus used in a first node according to an embodiment of this application, as shown in FIG. 9. In FIG. 9, the processing apparatus 1600 in the first node includes a first receiver 1601 and a first transmitter 1602.

The first receiver 1601 is configured to receive a first message, where the first message indicates a first CSI-RS resource set, and the first CSI-RS resource set includes a first CSI-RS resource.

In Embodiment 9, a frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the first receiver 1601 performs measurement on the first CSI-RS resource; and the first transmitter 1602 sends first CSI.

In Embodiment 9, the measurement performed on the first CSI-RS resource is used for calculating the first CSI; and the first CSI-RS resource is identified by one *NZP-CSI-RS-ResourceId*, and the measurement performed on the first CSI-RS resource includes channel measurement or interference measurement.

In an embodiment, the first receiver 1601 receives a first PDSCH.

In Embodiment 9, the first CSI-RS resource is used for determining an RE occupied by the first PDSCH, and the RE occupied by the first PDSCH does not include an RE of the first CSI-RS resource; and the first CSI-RS resource is identified by one *ZP-CSI-RS-Resourceld.*

In an embodiment, each of the at least two RB sets is indicated by one *CSI-FrequencyOccupation.*

In an embodiment, the first CSI-RS resource set includes a second CSI-RS resource, the second CSI-RS resource occupies only one RB set, and the one RB set includes a plurality of contiguous RBs.

In an embodiment, the first transmitter 1602 sends a second message.

In Embodiment 9, the second message is used for determining a configuration of the first CSI-RS resource, and the second message indicates a capability of the first node.

In an embodiment, the first receiver 1601 receives a third message.

In Embodiment 9, the third message indicates a first reporting configuration, and the first reporting configuration is applied to the first CSI; and the first reporting configuration indicates that the CSI for a first frequency-domain resource is to be reported, and the first frequency-domain resource includes at least one RB that does not belong to the frequency-domain resource across which the first CSI-RS resource spans.

In an embodiment, the third message indicates a first CSI-IM resource set, the first CSI-IM resource set includes a first CSI-IM resource, and interference measurement for the first CSI-IM resource is used for calculating the first CSI. A frequency-domain resource occupied by the first CSI-IM resource is a plurality of contiguous RBs.

In an embodiment, the first node 1600 is a user equipment.

In an embodiment, the first transmitter 1602 includes at least one of an antenna 452, a transmitter/receiver 454, a multi-antenna transmit processor 457, a transmit processor 468, a controller/processor 459, a memory 460, and a data source 467 in FIG. 4 of this application.

In an embodiment, the first transmitter 1602 includes an antenna 452, a transmitter/receiver 454, a multi-antenna transmit processor 457, a transmit processor 468, a controller/processor 459, a memory 460, and a data source 467 in FIG. 4 of this application.

In an embodiment, the first receiver 1601 includes at least the first five of an antenna 452, a receiver 454, a multi-antenna receive processor 458, a receive processor 456, a controller/processor 459, a memory 460, and a data source 467 in FIG. 4 of this application.

In an embodiment, the first receiver 1601 includes at least the first four of an antenna 452, a receiver 454, a multi-antenna receive processor 458, a receive processor 456, a controller/processor 459, a memory 460, and a data source 467 in FIG. 4 of this application.

In an embodiment, the first receiver 1601 includes at least the first three of an antenna 452, a receiver 454, a multi-antenna receive processor 458, a receive processor 456, a controller/processor 459, a memory 460, and a data source 467 in FIG. 4 of this application.

### Embodiment 10

Embodiment 10 illustrates a block diagram of a structure of a processing apparatus used in a second node according to an embodiment of this application, as shown in FIG. 10. In FIG. 10, the processing apparatus 1700 in the second node includes a second transmitter 1701 and a second receiver 1702.

The second transmitter 1701 is configured to send a first message, where the first message indicates a first CSI-RS resource set, and the first CSI-RS resource set includes a first CSI-RS resource.

In Embodiment 10, a frequency-domain resource across which the first CSI-RS resource spans includes at least two RB sets, each of the at least two RB sets includes a plurality of RBs that are contiguous in frequency domain, and any two of the at least two RB sets are discontiguous in frequency domain.

In an embodiment, the second receiver 1702 receives first CSI.

In Embodiment 10, measurement performed on the first CSI-RS resource is used for calculating the first CSI; and the first CSI-RS resource is identified by one *NZP-CSI-RS-ResourceId,* and the measurement performed on the first CSI-RS resource includes channel measurement or interference measurement.

In an embodiment, the second transmitter 1701 sends a first PDSCH.

In Embodiment 10, the first CSI-RS resource is used for determining an RE occupied by the first PDSCH, and the RE occupied by the first PDSCH does not include an RE of the first CSI-RS resource; and the first CSI-RS resource is identified by one *ZP-CSI-RS-Resourceld.*

In an embodiment, each of the at least two RB sets is indicated by one *CSI-FrequencyOccupation.*

In an embodiment, the first CSI-RS resource set includes a second CSI-RS resource, the second CSI-RS resource occupies only one RB set, and the one RB set includes a plurality of contiguous RBs.

In an embodiment, the second receiver 1702 receives a second message.

In Embodiment 10, the second message is used for determining a configuration of the first CSI-RS resource, and the second message indicates a capability of the first node.

In an embodiment, the second transmitter 1701 sends a third message.

In Embodiment 10, the third message indicates a first reporting configuration, and the first reporting configuration is applied to the first CSI; and the first reporting configuration indicates that the CSI for a first frequency-domain resource is to be reported, and the first frequency-domain resource includes at least one RB that does not belong to the frequency-domain resource across which the first CSI-RS resource spans.

In an embodiment, the third message indicates a first CSI-IM resource set, the first CSI-IM resource set includes a first CSI-IM resource, and interference measurement for the first CSI-IM resource is used for calculating the first CSI. A frequency-domain resource occupied by the first CSI-IM resource is a plurality of contiguous RBs.

In an embodiment, the second transmitter 1701 sends a reference signal over a CSI-RS resource.

In an embodiment, the second node 1700 is a base station.

In an embodiment, the second transmitter 1701 includes an antenna 420, a transmitter 418, a transmit processor 416, and a controller/processor 475 in FIG. 4 of this application.

In an embodiment, the second transmitter 1701 includes an antenna 420, a transmitter 418, a multi-antenna transmit processor 471, a transmit processor 416, and a controller/processor 475 in FIG. 4 of this application.

In an embodiment, the second transmitter 1701 includes an antenna 420, a transmitter 418, a transmit processor 416, and a controller/processor 475.

In an embodiment, the second transmitter 1701 includes an antenna 420, a transmitter 418, a multi-antenna transmit processor 471, a transmit processor 416, and a controller/processor 475 in FIG. 4 of this application.

In an embodiment, the second receiver 1702 includes an antenna 420, a receiver 418, a multi-antenna receive processor 472, a receive processor 470, and a controller/processor 475 in FIG. 4 of this application.

In an embodiment, the second receiver 1702 includes a controller/processor 475 in FIG. 4 of this application.

A person of ordinary skill in the art may understand that a part or all of the steps of the foregoing embodiments may be implemented by a program instructing relevant hardware. The program may be stored in a computer-readable storage medium such as a read-only memory, a hard disk drive, or an optical disc. Alternatively, a part or all of the steps of the foregoing embodiments may also be implemented by using one or more integrated circuits. Correspondingly, modules and units in the foregoing embodiments may be implemented in the form of hardware or in the form of software functional modules, and this application is not limited to any specific form of combination of software and hardware. The user equipment, the terminal, and the UE in this application include, but are not limited to, a wireless communication device such as an unmanned aerial vehicle, a communication module on an unmanned aerial vehicle, a remote control aircraft, an aircraft, a small aircraft, a mobile phone, a tablet computer, a notebook, an in-vehicle communication device, a wireless sensor, a network card, an internet of things terminal, a radio frequency identification (RFID) terminal, a narrow band internet of things (NB-IoT) terminal, a machine type communication (MTC) terminal, an enhanced MTC (eMTC) terminal, a data card, a network card, an in-vehicle communication device, a low-cost mobile phone, or a low-cost tablet computer. The base station or the system device in this application include, but are not limited to, a wireless communication device such as a macro cell base station, a micro cell base station, a home base station, a relay base station, a gNB (NR NodeB), or a TRP.

It should be understood by a person skilled in the art that the present invention may be implemented in another specified form without departing from the core or essential features thereof. Therefore, the currently disclosed embodiments should in any event be regarded as descriptive rather than limitative. The scope of the present invention is defined by the appended claims rather than the foregoing descriptions. All modifications within the meaning and range of equivalency of the claims are to be included therein.

## Claims

1. A first node, configured for wireless communication and comprising:
a first receiver, configured to receive a first message, wherein the first message indicates a first CSI-RS resource set, and the first CSI-RS resource set comprises a first CSI-RS resource, wherein
a frequency-domain resource across which the first CSI-RS resource spans comprises at least two RB sets, each of the at least two RB sets comprises a plurality of RBs that are contiguous in frequency domain, and any two of the at least two RB sets are discontiguous in frequency domain.

2. The first node according to claim 1, comprising:
the first receiver, configured to perform measurement on the first CSI-RS resource; and
a first transmitter, configured to send first CSI, wherein
the measurement performed on the first CSI-RS resource is used for calculating the first CSI; and the first CSI-RS resource is identified by one *NZP-CSI-RS-ResourceId,* and the measurement performed on the first CSI-RS resource comprises channel measurement or interference measurement.

3. The first node according to claim 1, comprising:
the first receiver, configured to receive a first PDSCH, wherein
the first CSI-RS resource is used for determining an RE occupied by the first PDSCH, and the RE occupied by the first PDSCH does not comprise an RE of the first CSI-RS resource; and the first CSI-RS resource is identified by one *ZP-CSI-RS-Resourceld.*

4. The first node according to any one of claims 1 to 3, wherein each of the at least two RB sets is indicated by one *CSI-FrequencyOccupation.*

5. The first node according to any one of claims 1 to 4, wherein the first CSI-RS resource set comprises a second CSI-RS resource, the second CSI-RS resource occupies only one RB set, and the one RB set comprises a plurality of contiguous RBs.

6. The first node according to any one of claims 1 to 5, comprising:
the first transmitter, configured to send a second message, wherein
the second message is used for determining a configuration of the first CSI-RS resource, and the second message indicates a capability of the first node.

7. The first node according to any one of claims 1 to 6, comprising:
the first receiver, configured to receive a third message, wherein
the third message indicates a first reporting configuration, and the first reporting configuration is applied to the first CSI; and the first reporting configuration indicates that the CSI for a first frequency-domain resource is to be reported, and the first frequency-domain resource comprises at least one RB that does not belong to the frequency-domain resource across which the first CSI-RS resource spans.

8. The first node according to claim 7, wherein the third message indicates a first CSI-IM resource set, the first CSI-IM resource set comprises a first CSI-IM resource, and interference measurement for the first CSI-IM resource is used for calculating the first CSI; and a frequency-domain resource occupied by the first CSI-IM resource is a plurality of contiguous RBs.

9. A second node, configured for wireless communication and comprising:
a second transmitter, configured to send a first message, wherein the first message indicates a first CSI-RS resource set, and the first CSI-RS resource set comprises a first CSI-RS resource, wherein
a frequency-domain resource across which the first CSI-RS resource spans comprises at least two RB sets, each of the at least two RB sets comprises a plurality of RBs that are contiguous in frequency domain, and any two of the at least two RB sets are discontiguous in frequency domain.

10. The second node according to claim 9, comprising:
a second receiver, configured to receive first CSI, wherein
measurement performed on the first CSI-RS resource is used for calculating the first CSI; and the first CSI-RS resource is identified by one *NZP-CSI-RS-ResourceId,* and the measurement performed on the first CSI-RS resource comprises channel measurement or interference measurement.

11. The second node according to claim 9, comprising:
the second transmitter, configured to send a first PDSCH, wherein
the first CSI-RS resource is used for determining an RE occupied by the first PDSCH, and the RE occupied by the first PDSCH does not comprise an RE of the first CSI-RS resource; and the first CSI-RS resource is identified by one *ZP-CSI-RS-Resourceld.*

12. The second node according to any one of claims 9 to 11, wherein each of the at least two RB sets is indicated by one *CSI-FrequencyOccupation.*

13. The second node according to any one of claims 9 to 12, wherein the first CSI-RS resource set comprises a second CSI-RS resource, the second CSI-RS resource occupies only one RB set, and the one RB set comprises a plurality of contiguous RBs.

14. The second node according to any one of claims 9 to 13, comprising:
the second receiver, configured to receive a second message, wherein
the second message is used for determining a configuration of the first CSI-RS resource, and the second message indicates a capability of a first node.

15. The second node according to any one of claims 9 to 14, comprising:
the second transmitter, configured to send a third message, wherein
the third message indicates a first reporting configuration, and the first reporting configuration is applied to the first CSI; and the first reporting configuration indicates that the CSI for a first frequency-domain resource is to be reported, and the first frequency-domain resource comprises at least one RB that does not belong to the frequency-domain resource across which the first CSI-RS resource spans.

16. The second node according to claim 15, wherein the third message indicates a first CSI-IM resource set, the first CSI-IM resource set comprises a first CSI-IM resource, and interference measurement for the first CSI-IM resource is used for calculating the first CSI; and a frequency-domain resource occupied by the first CSI-IM resource is a plurality of contiguous RBs.

17. A method applied to a first node configured for wireless communication, comprising:
receiving a first message, wherein the first message indicates a first CSI-RS resource set, and the first CSI-RS resource set comprises a first CSI-RS resource, wherein
a frequency-domain resource across which the first CSI-RS resource spans comprises at least two RB sets, each of the at least two RB sets comprises a plurality of RBs that are contiguous in frequency domain, and any two of the at least two RB sets are discontiguous in frequency domain.

18. The method applied to the first node according to claim 17, comprising:
performing measurement on the first CSI-RS resource; and
sending first CSI, wherein
the measurement performed on the first CSI-RS resource is used for calculating the first CSI; and the first CSI-RS resource is identified by one *NZP-CSI-RS-ResourceId*, and the measurement performed on the first CSI-RS resource comprises channel measurement or interference measurement.

19. The method applied to the first node according to claim 17, comprising:
receiving a first PDSCH, wherein
the first CSI-RS resource is used for determining an RE occupied by the first PDSCH, and the RE occupied by the first PDSCH does not comprise an RE of the first CSI-RS resource; and the first CSI-RS resource is identified by one *ZP-CSI-RS-Resourceld.*

20. The method applied to the first node according to any one of claims 17 to 19, wherein each of the at least two RB sets is indicated by one *CSI-FrequencyOccupation.*

21. The method applied to the first node according to any one of claims 17 to 20, wherein the first CSI-RS resource set comprises a second CSI-RS resource, the second CSI-RS resource occupies only one RB set, and the one RB set comprises a plurality of contiguous RBs.

22. The method applied to the first node according to any one of claims 17 to 21, comprising:
sending a second message, wherein
the second message is used for determining a configuration of the first CSI-RS resource, and the second message indicates a capability of the first node.

23. The method applied to the first node according to any one of claims 17 to 22, comprising:
receiving a third message, wherein
the third message indicates a first reporting configuration, and the first reporting configuration is applied to the first CSI; and the first reporting configuration indicates that the CSI for a first frequency-domain resource is to be reported, and the first frequency-domain resource comprises at least one RB that does not belong to the frequency-domain resource across which the first CSI-RS resource spans.

24. The method applied to the first node according to claim 23, wherein the third message indicates a first CSI-IM resource set, the first CSI-IM resource set comprises a first CSI-IM resource, and interference measurement for the first CSI-IM resource is used for calculating the first CSI; and a frequency-domain resource occupied by the first CSI-IM resource is a plurality of contiguous RBs.

25. A method applied to a second node configured for wireless communication, comprising:
sending a first message, wherein the first message indicates a first CSI-RS resource set, and the first CSI-RS resource set comprises a first CSI-RS resource, wherein
a frequency-domain resource across which the first CSI-RS resource spans comprises at least two RB sets, each of the at least two RB sets comprises a plurality of RBs that are contiguous in frequency domain, and any two of the at least two RB sets are discontiguous in frequency domain.

26. The method applied to the second node according to claim 25, comprising:
receiving first CSI, wherein
measurement performed on the first CSI-RS resource is used for calculating the first CSI; and the first CSI-RS resource is identified by one *NZP-CSI-RS-ResourceId*, and the measurement performed on the first CSI-RS resource comprises channel measurement or interference measurement.

27. The method applied to the second node according to claim 25, comprising:
a second transmitter, configured to send a first PDSCH, wherein
the first CSI-RS resource is used for determining an RE occupied by the first PDSCH, and the RE occupied by the first PDSCH does not comprise an RE of the first CSI-RS resource; and the first CSI-RS resource is identified by one *ZP-CSI-RS-Resourceld.*

28. The method applied to the second node according to any one of claims 25 to 27, wherein each of the at least two RB sets is indicated by one *CSI-FrequencyOccupation.*

29. The method applied to the second node according to any one of claims 25 to 28, wherein the first CSI-RS resource set comprises a second CSI-RS resource, the second CSI-RS resource occupies only one RB set, and the one RB set comprises a plurality of contiguous RBs.

30. The method applied to the second node according to any one of claims 25 to 29, comprising:
receiving a second message, wherein
the second message is used for determining a configuration of the first CSI-RS resource, and the second message indicates a capability of a first node.

31. The method applied to the second node according to any one of claims 25 to 30, comprising:
sending a third message, wherein
the third message indicates a first reporting configuration, and the first reporting configuration is applied to the first CSI; and the first reporting configuration indicates that the CSI for a first frequency-domain resource is to be reported, and the first frequency-domain resource comprises at least one RB that does not belong to the frequency-domain resource across which the first CSI-RS resource spans.

32. The method applied to the second node according to claim 31, wherein the third message indicates a first CSI-IM resource set, the first CSI-IM resource set comprises a first CSI-IM resource, and interference measurement for the first CSI-IM resource is used for calculating the first CSI; and a frequency-domain resource occupied by the first CSI-IM resource is a plurality of contiguous RBs.
